Europäisches Patentamt

European Patent Office

Office européen des brevets

(11) Veröffentlichungsnummer: **0 513 135 B1**

(12) EUROPÄISCHE PATENTSCHRIFT

(45) Veröffentlichungstag der Patentschrift: 31.08.94    (51) Int. Cl.5: **A01C 1/00**

(21) Anmeldenummer: **91903648.3**

(22) Anmeldetag: **31.01.91**

(86) Internationale Anmeldenummer:
**PCT/EP91/00183**

(87) Internationale Veröffentlichungsnummer:
**WO 91/11097 (08.08.91 91/18)**

(54) **VERFAHREN UNE EINRICHTUNG ZUR BEHANDLUNG VON SAATGUT.**

(30) Priorität: **31.01.90 DD 337417**
             **31.01.90 DD 337418**

(43) Veröffentlichungstag der Anmeldung:
**19.11.92 Patentblatt 92/47**

(45) Bekanntmachung des Hinweises auf die
Patenterteilung:
**31.08.94 Patentblatt 94/35**

(84) Benannte Vertragsstaaten:
**DE DK FR GB NL SE**

(56) Entgegenhaltungen:
**FR-A- 961 079
FR-A- 1 239 060
US-A- 3 901 807**

(73) Patentinhaber: **PFITZNER, Christian (als Gesellschafter der Gesellschaft für Umweltschutzberatung und -technik GbR)
Schänkestrasse 16
D-06502 Thale (DE)**

Patentinhaber: **HEINZMANN, Rainer (als Ge-**
sellschafter der Gesellschaft für Umweltschutzberatung und -technik GbR)
**Johanneshöfer Trift 42a
D-06484 Ouedlinburg (DE)**

Patentinhaber: **FRAUNHOFER-GESELLSCHAFT
ZUR FÖRDERUNG DER ANGEWANDTEN FOR-
SCHUNG E.V.
Leonrodstrasse 54
D-80636 München (DE)**

Patentinhaber: **VON ARDENNE ANLAGEN-
TECHNIK GMBH
Plattleite 19
D-01324 Dresden (DE)**

(72) Erfinder: **PANZER, Siegfried
Hellendorfer Strasse 8
D-01279 Dresden (DE)**
Erfinder: **GABER, Klaus
Wolfshügelstrasse 7
D-01324 Dresden (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

Erfinder: **MÜLLER, Petra**
**Winzerweg 13**
**D-14532 Kleinmachnow (DE)**
Erfinder: **JAHN, Marga**
**Grasweg 21**
**D-14532 Kleinmachnow (DE)**
Erfinder: **PFLAUMBAUM, Joachim**
**August-Bebel-Strasse 52**
**D-38889 Blankenburg (DE)**
Erfinder: **SCHOLZE, Friederun**
**Bockshornschanze 16**
**D-06484 Ouedlinburg (DE)**
Erfinder: **LANGE, Manfred**
**Halberstädter Chaussee 159**
**D-39116 Magdeburg (DE)**
Erfinder: **FISCHER, Reiner**
**Wallstrasse 53**
**D-06484 Ouedlinburg (DE)**
Erfinder: **MÜLLER, Rainer**
**Winzerweg 13**
**D-14532 Kleinmachnow (DE)**
Erfinder: **MOTTE, Günter**
**Nansenstrasse 18**
**D-14471 Potsdam (DE)**
Erfinder: **LEJA, Michael**
**Bernard-Koenen-Strasse 6**
**D-06484 Ouedlinburg (DE)**


(74) Vertreter: **Patentanwälte Grünecker, Kinkel-**
**dey, Stockmair & Partner**
**Maximilianstrasse 58**
**D-80538 München (DE)**

**Beschreibung**

Die vorliegende Erfindung betrifft ein Verfahren und eine Einrichtung zur Behandlung von Saatgut zur Bekämpfung von samen- und/oder bodenbürtigen Schaderregern. Das Verfahren und die Einrichtung nach der vorliegenden Erfindung sind zur Behandlung von landwirtschaftlichem, gärtnerischem oder forstlichem Saatgut vorgesehen, insbesondere zur Behandlung von Getreide. Die Erfindung ist insbesondere für die Bekämpfung des Flugbrandes bei Weizen und Gerste in der landwirtschaftlichen Produktion geeignet.

Es ist bei bestimmten Getreidekulturarten bekannt, das Saatgut gegen samenbürtige pilzliche Schaderreger zu beizen. Hierfür sind eine Reihe von chemischen und physikalischen Behandlungsverfahren bekannt. Die chemische Behandlung erfolgt in der Regel mit Beizmitteln, die einen oder mehrere Wirkstoffe enthalten. Die spezifischen Krankheitserreger des Weizenflugbrandes (Ustilago tritici), des Gerstenflugbrandes (Ustilago nuda) und andere samenbürtige Schaderreger können jedoch wirksam nur mittels Kombinationspräparaten bekämpft werden, die in der Regel aus einer Quecksilberverbindung und einem systemisch angreifenden Wirkstoff oder aus quecksilberfreien Kombinationspräparaten und mindestens einem systemisch angreifenden Wirkstoff bestehen.

Es ist in diesem Zusammenhang bekannt, hochtoxische, breitbandig wirkende Chemikalien auf der Basis von Quecksilberverbindungen zu verwenden, deren Wirkungsbereich die Oberfläche und Samenschale des Samenkornes ist. Die quecksilberfreien Beizmittel mit schmal- oder breitbandiger Wirkung gestatten es auch, tiefer im Samenkorn siedelnde Schaderreger zu bekämpfen. Von der vorbeschriebenen Beizung mit Chemikalien wird außerdem erwartet, daß sie unter Anhaftung am Samenkorn dieses auch vor bodenbürtigen Schaderregern schützen. Die Applikation dieser Mittel erfordert neben einer hohen Anlagerungsgeschwindigkeit auch spezifische Vorrichtungen, die den Applikationsbedingungen genügen.

Die Nachteile der chemischen Beizung liegen in der Toxizität der verwendeten Wirkstoffe für Warmblüter und den Menschen sowie in sich entwickelnden Resistenzerscheinungen bei längerer Anwendung für bestimmte Schaderreger. Die quecksilberfreien Beizen sind andererseits wesentlich teurer. Die Resistenzerscheinungen verstärken sich auch dadurch, daß die Mittel zur Bestandsbehandlung (Pflanzenschutzmittel) die gleichen Wirkstoffe oder Wirkstoffe der gleichen Gruppen wie die Beizmittel enthalten. Eine weitere Wirkung der chemischen Beizmittel liegt in ihrem Rückstandsverhalten in den Kulturpflanzen und den damit verbundenen negativen Wirkungen auf den menschlichen und tierischen Organismus. Dabei spielen die Aufwandsmengen und der Metabolismus eine bedeutende Rolle. Schließlich haben die bekannten Verfahren und Einrichtungen zur chemischen Beizung von Saatgut häufig den Nachteil, daß die fungizide Potenz der Beizmittel nicht voll ausgeschöpft wird und die potentielle Gefahr phytotoxischer Schädigung des Saatgutes durch Überdosierung besteht. Letzteres tritt häufig durch ungleichmäßige Anlagerung des Beizmittels an den Samenkörnern auf.

Es ist auch bekannt, das Beizmittel auf das Saatgut im Vakuum aufzubringen (DD-PS 18 675, DD-PS 23 421). Das Vakuum dient dabei gleichzeitig zur Verbesserung der Bekämpfung von Flugbrand bei Getreide durch zusätzliche Einwirkung feuchter Wärme. Einrichtungen dieser Art haben jedoch keine größere Bedeutung erlangt, weil die Prozeßführung sehr zeitaufwendig ist und nur eine verhältnismäßig niedrige Durchsatzleistung erreichbar ist, die den Erfordernissen einer leistungsfähigen technologischen Prozeßführung, insbesondere in zentralen Saatgutaufbereitungseinrichtungen, nicht entspricht.

Als ein physikalisches Beizverfahren zur Bekämpfung des Gerstenflugbrandes ist auch das Heißwasserbeizen bekannt. Dieses ist zwar besonders umweltfreundlich, da es ungiftig und ohne Rückstandsbelastung ist, ergibt andererseits aber nur geringe Bekämpfungserfolge und hat sich daher nicht als sehr praxiswirksam erwiesen.

Die Anwendung ionisierter, hochenergetischer Strahlen, wie Gamma- oder Röntgenstrahlen für die Bekämpfung mikrobieller Schaderreger am Saatgut, ist nicht möglich, da die erforderliche Bestrahlungsdosis zu mutagenen bzw. phytotoxischen Wirkungen auf das Saatgut führt.

Es ist weiterhin bekannt, zur Bekämpfung samenbürtiger Schaderreger niederenergetische Elektronenstrahlen im Vakuum oder in freier Atmosphäre einzusetzen (DD-PS 242 337, DD-PS 238 715, US-PS 4 633 611). Dabei werden die Elektronenenergie und die Strahlendosis so bemessen, daß mikrobielle Schaderreger an der Oberfläche und in den oberflächennahen Schichten des Saatkornes (Karyopse) ohne ertragsbeeinflussende oder phytotoxische Effekte in bezug auf den Keim abgetötet werden.

Ein solches Verfahren hat zwar den Vorteil, daß es keinerlei toxische Belastung und Gefährdung von Personen oder der Umwelt hervorruft; allerdings werden samenübertragbare Schaderreger in tieferen Schichten des Kornes und im Keim nicht bzw. nur teilweise erfaßt und das Saatgut ist dem Befall durch bodenbürtige Schaderreger ungehindert ausgesetzt. Das Elektronenbeizen führt daher bei der Bekämpfung des Gersten- und Weizenflugbranderregers nicht in hinreichendem Maße zum Erfolg, da diese in den tieferen Schichten der Karyopse angesiedelt sind.

Aus der FR-PS 961 079 ist eine Bestrahlungseinrichtung mit gegenüberliegend an einer Bestrahlungskammer angeordneten Elektronenstrahlerzeugern bekannt, bei der das zu bestrahlende Material von oben in die Bestrahlungskammer ein- und nach unten wieder aus dieser austritt. Eine solche Einrichtung schafft jedoch keine Voraussetzungen für eine hinreichend individuelle Bestrahlung von körnigem Schüttgutmaterial, wie Saatgut, zum Beizen dieses Materiales.

In jüngerer Zeit sind zunehmend biologische Bekämpfungsverfahren mittels mikrobieller Antagonisten beschrieben worden, die gegen samenbürtige Schaderreger eingesetzt werden (AT-PS 360 274, DE-OS 33 11 071, EP-PS 255 774, US-PS 4 798 723 etc.).

Dabei kommen bakterielle Antagonisten wie z.B. Bacillus spp., Streptomyces spp., Pseudomonas spp. und pilzliche Antagonisten, wie Chaetomium spp., Gliocladium spp., Penecillium spp., Trichoderma spp. u.a. zum Einsatz. Die unter Laborbedingungen bei optimalen Temperaturen über 20°C aufgefundenen guten fungiziden Wirkungen bestätigen sich beim Übergang zum Freiland allerdings häufig nicht, und es sind erhebliche Wirkungsunsicherheiten aufgetreten. Zur Verbesserung der Wirksamkeit wurden deshalb Gemische von mikrobiellen Antagonisten und Fungiziden zur Anwendung beschrieben (DE-OS 23 52 403, DE-OS 27 40 052, DD-PS 267 420).

Als Mangel beim gegenwärtigen Stand der Schaderregerbekämpfung mittels Antagonisten wird angesehen, daß deren Vitalität und damit Wirksamkeit durch vorhandene samenbürtige Schaderreger, zugemischte breitbandig wirkende Fungizide oder ungünstige Siedlungsbedingungen für die Antagonisten auf dem Samenkorn eingeschränkt wird.

Schließlich sind auch schon Verfahren zur Saatgutbehandlung mit symbiontischen Mikroorganismen oder Mikorrhizapilzen vorgeschlagen worden. Ziel dieser Maßnahmen ist es, mit dem Samenkorn Mikroorganismen in den Boden zu übertragen, die in Symbiose mit der Nutzpflanze oder in deren unmittelbarer Bodenumgebung lebend mit ihren Stoffwechselprodukten wichtige Makronährstoffe für die Nutzpflanze zur Verfügung stellen. Auch in diesem Fall können sich allerdings vor allem samenbürtige Schaderreger bzw. breitbandig wirkende Fungizide nachteilig auf die Entwicklung und damit die Wirksamkeit dieser Mikroorganismen auswirken.

Der Erfindung liegt daher die Aufgabe zugrunde, ein Verfahren der eingangs genannten Art, und aus US-A-4 633 611 bekannt, anzugeben, das eine erhöhte Effizienz bei der Bekämpfung von samen- und/oder bodenbürtigen Schaderregern gestattet, dabei eine erhöhte Umweltverträglichkeit besitzt und eine hohe Durchsatzleistung gestattet. Das Verfahren soll zudem zu einer vollkommeneren Schaderregerbekämpfung am Saatgut unabhängig von der Lokalisierung des Schaderregerbesatzes am Saatgutkorn führen.

Der Erfindung liegt ferner die Aufgabe zugrunde ausgehend von eine Einrichtung wie sie aus US-A-4 633 611 bekannt ist, eine Einrichtung zur Behandlung von Saatgut zur Bekämpfung von samenbürtigen und/oder bodenbürtigen Schaderregern zu schaffen, die eine hohe Durchsatzleistung bei der Behandlung des Saatgutes und eine allseitige Behandlung desselben mit hoher Effizienz bei der Bekämpfung der Schaderreger unabhängig von deren Lokalisierung am oder im Saatgut gestattet.

In Bezug auf das Saatgutbehandlungsverfahren wird diese Aufgabe erfindungsgemäß dadurch gelöst, daß das Saatgut in unmittelbarer zeitlicher Abfolge einer kombinierten Behandlung mit niederenergetischen Elektronenstrahlen und, hieran anschließend, mit chemischen Wirkstoffen und/oder biologischem Material unterzogen wird.

Überraschenderweise wurde gefunden, daß die Saatgutbehandlung zur Schaderregerbekämpfung in zwei unmittelbar aufeinanderfolgenden Verfahrensschritten, nämlich der allseitigen Bestrahlung des Saatgutes mit niederenergetischen Elektronen im ersten Verfahrensschritt und der sich hieran unmittelbar anschließenden Behandlung des so bestrahlten Saatgutes mit einer Applikation chemischer Wirkstoffe und/oder biologischen Materials im zweiten Schritt zu einem synergistischen Effekt und einem unerwartet guten Ergebnis bei der Bekämpfung von samenund/oder bodenbürtigen Schaderregern führt. Diese überraschend gute Wirkung des Verfahrens nach der vorliegenden Erfindung wird darauf zurückgeführt, daß mit den niederenergetischen Elektronenstrahlen zunächst die Bekämpfung der pilzlichen Schaderreger an der Oberfläche und im oberflächennahen Bereich des Saatgutes bzw. der Samenkörner erfolgt, wobei nicht abgetötete Schaderreger in den genannten Bereichen sensibilisiert werden und infolge dieser Sensibilisierung durch unmittelbar im Anschluß an die Elektronenbeizung mit chemischen Wirkstoffen oder Mitteln und/oder mit biologischem Material (insbesondere mikrobiellen Antagonisten) wirksamer bekämpft werden können. Bei Anwendung chemischer Wirkstoffe oder Mittel ist es möglich, hierbei selbst bei verringerten Aufwandsmengen eine höhere Bekämpfungsrate zu erzielen. Da die durch das Elektronenbeizen hergestellte Sensibilität nicht unbegrenzt erhalten bleibt, führt die erfindungsgemäße Verfahrensführung der Behandlung des Saatgutes in einem kontinuierlichen Behandlungsprozeß, der in unmittelbar abfolgende Verfahrensschritte unterteilt ist, zu besonders guten Ergebnissen bei der Bekämpfung der Schaderreger. Durch das erfindungsgemäße Verfahren wird überdies eine bessere Anlagerung der chemischen und/oder biologischen Applikation sowie eine verbesserte Tiefenwirkung für chemische Wirkstoffe oder mikrobielle Antagonisten erreicht. Die Eindringtiefe kann durch die Wahl der Druckstufe für die Applikation der chemischen Wirkstoffe oder Mittel und/oder des biologischen Materiales zusätzlich gesteuert werden.

Gemäß einem bevorzugten Ausführungsbeispiel der vorliegenden Erfindung wird das Saatgut in einem ersten Verfahrensschritt vereinzelt und in im wesentlichen gleichmäßiger, beabstandeter Verteilung im freien Fall und im Vakuum durch eine Bestrahlungskammer bewegt sowie hieran unmittelbar anschließend in einem zweiten Verfahrensschritt einer Applikation mit Fungiziden oder deren Wirkstoffen und/oder mikrobiellen Antagonisten oder deren Stoffwechselprodukten und Sporen und/oder das Pflanzenwachstum fördernde Mikroorganismen (Synergisten) gegebenenfalls in Verbindung mit Nährstoffen unterzogen.

Vorzugsweise wird das Saatgut in dem ersten Verfahrensschritt im freien Fall im Bestrahlungsbereich mit allseitig quasimonoenergetischen Elektronenstrahlen, Elektronen wesentlich geringerer Energie (Streuelektronen) sowie Plasmateilchen bestrahlt, die an der Oberfläche des Saatgutes sowie in einer außerhalb der Keimanlage verlaufenden Randschicht des Saatgutes einwirken.

Gemäß einer weiteren, bevorzugten Ausgestaltung des erfindungsgemäßen Verfahrens wird bevorzugt, daß die chemische und/oder biologische Applikation des zweiten Verfahrensschrittes im Vakuum, wahrend des Abbaus des Vakuums nach der Elektronenstrahlbehandlung des Saatgutes oder unter Atmosphärendruck erfolgt.

Für den Fall, daß die Behandlung des Saatgutes im Anschluß an das Elektronenbeizen unter Vakuum erfolgt, wird hierfür vorzugsweise ein Vakuumdruck gewählt, der in etwa dem Sättigungsdampfdruck der Applikation entspricht.

Weitere, bevorzugte Ausgestaltungen des erfindungsgemäßen Verfahrens sind in den übrigen Unteransprüchen dargestellt.

Zur lösung der obigen Aufgabe in bezug auf die Einrichtung zur Behandlung von Saatgut zur Bekämpfung von samenbürtigen und/oder bodenbürtigen Schaderregern, insbesondere zur Durchführung des vorerläuterten Verfahrens, ist erfindungsgemäß eine Einrichtung nach dem Oberbegriff des Anspruches 8 vorgesehen, wobei die Bestrahlungskammer so ausgebildet ist, daß der Saatgutstrom im freien Fall durch die Bestrahlungskammer geführt werden kann und eine Mehrzahl von Elektronenstrahlerzeugern an der Bestrahlungskammer angeordnet ist, zur Behandlung des Saatgutes unter Auffächern der Elektronenstrahlen in einem Bestrahlungsbereich der Bestrahlungskammer, sowie zumindest einer Behandlungskammer in Strömungsverbindung mit der Bestrahlungskammer, verbunden mit Applikationseinrichtungen zur chemischen und/oder biologischen Behandlung des Saatgutes.

Vorzugsweise weist die Einrichtung eine evakuierte Bestrahlungskammer mit an dieser angeordneten Elektronenkanonen sowie Schleusen zum druckentkoppelten Ein- und Ausbringen des Saatgutes in die Behandlungskammer hinein und aus dieser heraus auf, ferner eine Verteilereinrichtung an einer Eintrittsstelle des Saatgutes in die Bestrahlungskammer zur Vereinzelung des Saatgutes, einen Fallschacht zwischen der Verteilereinrichtung und einem Bestrahlungsbereich der Bestrahlungskammer mit zumindest zwei Elektronenkanonen, die in gleicher Höhe einander gegenüberliegen und mit Ablenkeinrichtungen zum Auffächern des Elektronenstrahles versehen und dem Bestrahlungsbereich zugeordnet sind, und wobei über eine Zwischenschleuse strömungsverbunden mit der Bestrahlungskammer stromab derselben ein Behandlungsbehälter, insbesondere Vakuumbehälter, angeordnet ist, der Applikationseinrichtungen für die Behandlung des Saatgutes, die vorzugsweise innerhalb des Behandlungsbehälters angeordnet sind, aufweist und wobei mit dem Behandlungsbehälter ein Vorratsgefäß für die Applikation aus chemischen Wirkstoffen oder Mitteln und/oder biologischem Material wie mikrobiellen Antagonisten verbunden ist.

Weitere, bevorzugte Ausgestaltungen der erfindungsgemäßen Einrichtung sind in den übrigen Unteransprüchen dargelegt.

Sowohl im Hinblick auf die Behandlung des Saatgutes mit fungiziden Wirkstoffen oder Mitteln als auch bei Behandlung mit antagonistischen Mikroorganismen und/oder deren Kulturlösungen, Kulturfiltraten sowie antibiotischen Stoffwechselprodukten im Anschluß an eine Bestrahlung des Saatgutes mit niederenergetischen Elektronen wurde eine überraschende synergistische Wirkungssteigerung gegen samen- und/oder bodenbürtige Schaderreger ohne ertragsbeeinflussende phytotoxische Effekte festgestellt. Die niederenergetische Elektronenstrahlbehandlung im Vakuum führt zu einer günstigen Prädisposition für eine wesentlich bessere Besiedelung des Saatgutes mit eingesetzten Mikroorganismen bzw. eine dauerhafte Anlagerung von Kulturfiltraten oder antibiotischen Stoffwechselprodukten am Saatgut.

Die Erfindung wird nachstehend anhand von Ausführungsbeispielen und zugehörigen Zeichnungen näher erläutert. In diesen zeigen:

Fig. 1 ein Samenkorn in schematischer Schnittdarstellung mit Schaderregern und einwirkenden Ladungsträgerteilchen,

Fig. 2 ein Samenkorn nach erfolgter Behandlung durch das Verfahren nach der vorliegenden Erfindung,

EP 0 513 135 B1

Fig. 3 eine Einrichtung zur Durchführung des Verfahrens schematisch im Längsschnitt,
Fig. 4 eine Einrichtung ähnlich derjenigen in Fig. 3 zur Saatgutbehandlung nach der vorliegenden Erfindung.

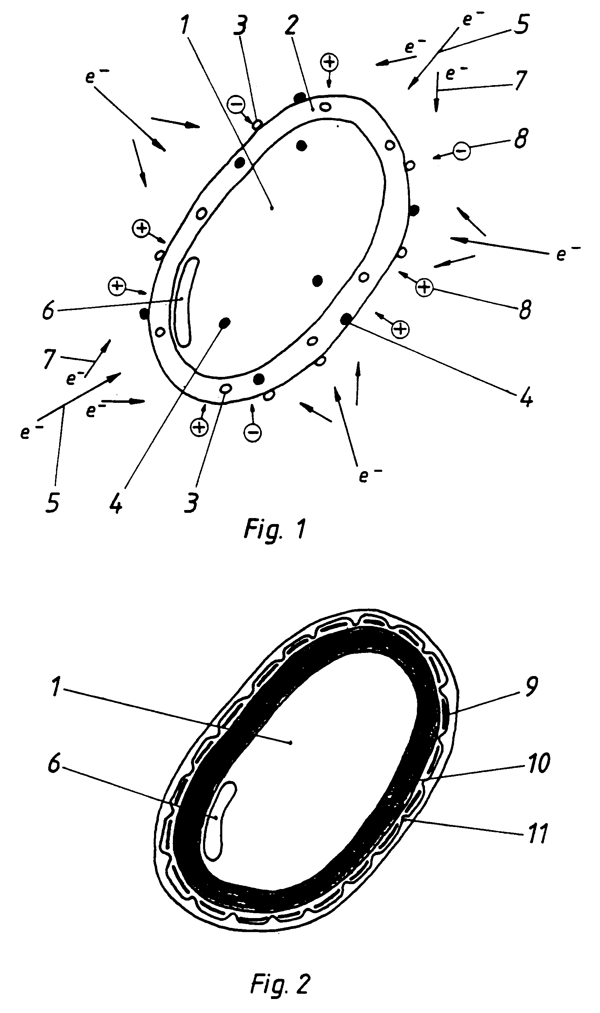

Wie in Fig. 1 schematisch dargestellt, ist das Samenkorn 1 an seiner Oberfläche und in der Samenschale 2 von verschiedenen Schaderregern 3 besiedelt. Weiter Schaderreger 4 sind außer in diesem Bereich auch im Inneren des Samenkorns 1 angesiedelt. Durch die allseitige Bestrahlung des Samenkorns 1 mit quasimonoenergetischen Elektronenstrahlen 5 wird die Oberfläche des Samenkorns 1 und eine angrenzende Randschicht desinfiziert. Die Dicke dieser desinfizierten Randschicht ist durch die Elektronenenergie bestimmt und wird abhängig von der Morphologie des Samenkorns 1 so gewählt, daß die Keimanlage 6 nicht mit erfaßt wird. Durch die allseitige Einwirkung von Streuelektronen 7 geringerer Energie als der der Elektronenstrahlen 5 und von Plasmateilchen 8 wird, wie in Fig. 2 gezeigt, eine aktivierte Oberfläche 9 erzeugt, die sich unmittelbar über der desinfizierten Randschicht 10 befindet. Mit zunehmendem Evakuierungsdruck wird die desinfizierende Wirkung reduziert und die aktivierende Wirkung erhöht. In Abhängigkeit von der jeweiligen Bestrahlungsaufgabe wird ein Evakuierungsdruck im Bereich von 10 Pa bis zu einigen 100 Pa gewählt. Im unmittelbaren zeitlichen Anschluß an die Randschichtdesinfektion und Oberflächenaktivierung wird auf die von den Elektronenstrahlen 5 aktivierte Oberfläche 9 eine Applikationsschicht 11 aufgebracht. Diese Applikationsschicht enthält ein spezifisch auf den Schaderreger 4 abgestimmtes Fungizid, fungiziden Wirkstoff oder formuliertes Fungizid (oder eine Wirkstoff- bzw. Fungizidkombination), das bzw. die auch im Innenbereich des Samenkornes 1 wirksam wird oder enthält einen oder mehrere, vorzugsweise auch gegen bodenbürtige Schaderreger wirkenden mikrobiellen Antagonisten oder das Pflanzenwachstum fördernde Mikroorganismen und Nährstoffe. Die Applikationsschicht 11 kann auch ein Gemisch aus fungiziden Wirkstoffen und mikrobiellen Antagonisten, deren Stoffwechselprodukten und Sporen, oder das Pflanzenwachstum fördernden Mikroorganismen und Nährstoffen enthalten.

Durch die Kombination der Bestrahlung des Saatgutes mit niederenergetischen Elektronen mit der Anlagerung von antagonistischen Mikroorganismen erfolgt eine schnelle, ungehinderte Besiedelung durch die erfindungsgemäß eingesetzten Mikroorganismen, so daß eine hohe antagonistische Aktivität ausgebildet wird. Eingesetzte Kulturfiltrate bzw. antibiotische Stoffwechselprodukte zeigen eine hohe, lang anhaltende Aktivität auf bzw. im Saatgut.

Bei Verwendung eines fungiziden Wirkstoffes oder Mittels im Anschluß an die Bestrahlung des Saatgutes mit niederenergetischen Elektronen wird eine bessere Anlagerung des oder der chemischen Wirkstoffe bzw. Mittel an dem Samenkorn erreicht. Durch das Eindringen des Wirkstoffes ist überdies eine verbesserte Tiefenwirkung zu erzielen. Die Eindringtiefe des Wirkstoffes kann durch die Wahl der Druckstufe für die Applikation der chemischen Wirkstoffe, die zeitlich in unmittelbarem Anschluß an die Bestrahlung des Saatgutes durch niederenergetische Elektronenstrahlen im Vakuum erfolgt, gesteuert werden.

Nach einem bevorzugten Ausführungsbeispiel der Erfindung wird das Saatgut in einem ersten Verfahrensschritt einer Elektronenbeizung in einer evakuierten Bestrahlungskammer unterzogen, in der auf das Saatgut allseitig quasimonoenergetische Elektronenstrahlen, Elektronen mit gegenüber diesen wesentlich geringerer Energie (Streuelektronen) und Plasmateilchen einwirken. Das Saatgut wird über Schleusen in die Bestrahlungskammer eingebracht. Zum Erreichen der allseitigen Einwirkung der Elektronen auf das Saatgut wird dieses beim Eintritt in die Bestrahlungskammer so vereinzelt, daß es über den gesamten Querschnitt des Bestrahlungsbereiches gleichmäßig verteilt ist und diesen im freien Fall passiert. Die Erzeugung der Plasmateilchen und der entsprechenden Einwirkbedingungen erfolgt durch geeigneten Einschluß von Elektronenstrahlen in die auf einen konstant gehaltenen Arbeitsdruck im Bereich von ca. 10 Pa bis zu einigen 100 Pa evakuierte Bestrahlungskammer. Mit dem quasimonoenergetischen Elektronenstrahl wird die Oberfläche und eine außerhalb der Keimanlage liegende Randschicht des jeweiligen Samenkornes desinfiziert. Mit den Elektronen geringerer Energie und den Plasmateilchen wird gleichzeitig auch die Samenoberfläche aktiviert. In unmittelbarer zeitlicher Abfolge an diesen ersten Verfahrensschritt wird als zweiter Verfahrensschritt außerhalb der evakuierten Bestrahlungskammer eine Applikation aufgebracht, die fungizide Wirkstoffe oder Mittel und/oder mikrobielle Antagonisten, deren Stoffwechselprodukte und Sporen oder das Pflanzenwachstum fördernde Mikroorganismen und Nährstoffe in einem Gemisch oder mit zumindest einer der vorgenannten Komponenten enthält.

Bei Verwendung eines fungiziden Wirkstoffes oder Mittels ist dieser bzw. dieses vorzugsweise ein biotisch oder abiotisches Fungizid mit spezifischer Wirkung gegen den oder die unterhalb der mit dem Elektronstrahl desinfizierten Randschicht des Samenkorns siedelnden samenbürtigen Krankheitserreger. Die mikrobiellen Antagonisten und/oder die das Pflanzenwachstum fördernden Mikroorganismen sind auf Verträglichkeit mit dem eingesetzten Fungizid abgestimmt, sofern ein Gemisch aus einer chemischen und einer biologischen Wirkkomponente gewählt wird. Die mikrobiellen Antagonisten sind außerdem in bezug auf ihre Wirksamkeit auf bodenbürtige Schaderreger ausgewählt.

6

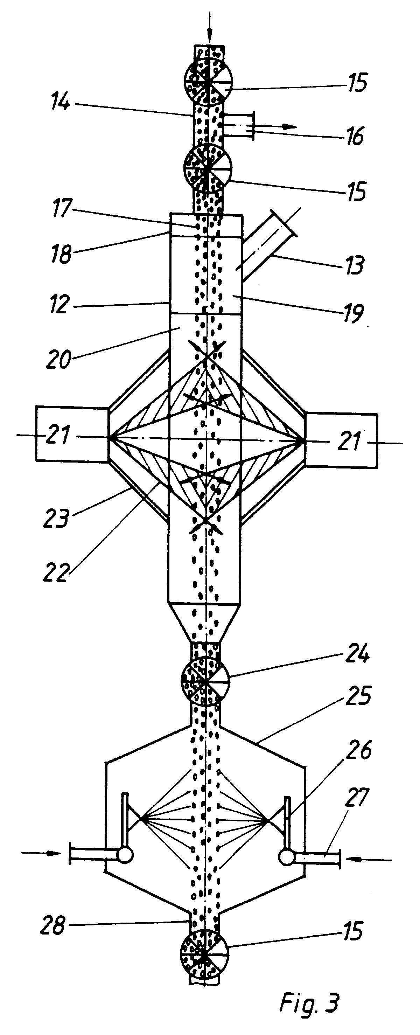

Nachfolgend wird unter Bezugnahme auf Fig. 3 und die beigefügte Tabelle ein Verfahren erläutert, bei dem im Anschluß an die Bestrahlung des Saatgutes mit niederenergetischen Elektronen in einem integralen Prozeß die Behandlung des Saatgutes mit bakteriellen und/oder pilzlichen Antagonisten erfolgt.

Effekte der Besiedelung mit antagonistischen Mikroorganismen an Weizenkörnern nach Behandlung mit niederenergetischen Elektronen

| Schaderreger | ohne Be-siedelung | Weizenkörner nach Behandlung mit niederenergetischen Elektronen | | | | | | | | | |
|---|---|---|---|---|---|---|---|---|---|---|---|
| | | 1 | 2 | 3 | 4 | 5 | 6 | 7 | 8 | 9 | 10 |
| Fusarium avenaceum | T | ++ | ++ | ++ | +++ | ++ | + | + | + | +++ | + |
| Fusarium culmorum | T | ++ | ++ | ++ | +++ | ++ | -+ | + | + | +++ | + |
| Fusarium graminearum | T | ++ | ++ | -,ü | +++ | -,ü | + | + | -,ü | +++ | + |
| Microdochium nivale | T | ++ | ++ | + | +++ | ++ | + | + | + | + | + |
| Septoria nodorum | ü | nu | nu | nu | nu | nu | + | + | + | +++ | + |
| Drechslera teres | ü | ++ | ++ | ++ | nu | ++ | + | ++ | + | +++ | + |
| Gaeumannomyces graminis | ü | ++ | ++ | ++ | +++ | +++ | + | +++ | ++ | +++ | + |

1...5 bakterielle Antagonisten
6...10 pilzliche Antagonisten

| Spalte | |
|---|---|
| 1 | (IMET 11 425) |
| 2 | (IMET 11 427) |
| 3 | (IMET 11 424) |
| 4 | (IMET 11 426) |
| 5 | (IMET 11 428) |
| 6 | (IMET 43 921) |
| 7 | (IMET 43 923) |
| 8 | (IMET 43 922) |
| 9 | (IMET 43 920) |
| 10 | (IMET 43 924) |

Legende:
nu = nicht untersucht
+++ = starke Hemmung mit deutlicher Hemmzone
++ = Hemmung mit deutlicher Hemmzone
+ = Wachstumsstop des Schaderregers ohne Hemmzone
- = keine Effekte
T = Samenkorn bzw. Keimpflanze abgestorben
ü = Samenkorn bzw. Keimpflanze überwachsen und geschädigt

Für diese Ausführungsform des erfindungsgemäßen Verfahrens zur Saatgutbehandlung eignen sich insbesondere mikrobielle Antagonisten wie Bacillus spp., Pseudomonas spp., Trichoderma spp., Chaetomium spp., Epicoccum spp., Penicillium spp. (IMET 11424, IMET 11425, IMET 11426, IMET 11427, IMET 11428, IMET 43920, IMET 43921, IMET 43922, IMET 43923, IMET 43924), hefeartige Mikroorganismen und andere bekannte Antagonisten gegen pilzliche Schaderreger. Die vorbezeichneten bakteriellen und pilzlichen Antagonisten wurden bei der Nationalen Sammlung von Mikroorganismen (IMET), Institut für Mikrobiologie und experimentelle Therapie, Beutenbergstraße 11, 0-6900 Jena, DE, hinterlegt (vormals Zentralinstitut für Mikrobiologie und experimentelle Therapie der Akademie der Wissenschaften der DDR, DDR-6900 Jena, Beutenbergstraße 11).

Die Hinterlegung der Stämme IMET 11424 und IMET 11425 erfolgte am 18.12.1989, die der Stämme IMET 11426-28 am 19.12.1989.

Die Hinterlegung der Stämme IMET 43920, IMET 43921 und IMET 43922 erfolgte am 19.12.1989.

Die Hinterlegung der Stämme IMET 43923 und IMET 43924 erfolgte am 05.01.1990 und 15.01.1990.

In der nachfolgenden Tabelle wird zusammengefaßt der Schutz des keimenden Samenkornes und der Keimpflanze vor Schaderregerbefall nach Elektronenstrahlbehandlung kombiniert mit dem Einsatz mikrobieller Antagonisten dargestellt. Die Ermittlung der Wirkung gegen die angeführten Schaderreger erfolgte nach vierwöchiger Versuchsdauer bei 10°C Versuchstemperatur. Es konnte ein deutlicher Schutz der durch das erfindungsgemäße Verfahren behandelten Samenkörner und daraus resultierender Keimpflanzen festgestellt werden.

Anhand von Fig. 3, die eine Einrichtung zum Elektronenbeizen sowie anschließenden Behandeln des elektronenbestrahlten Saatgutes mit einer chemischen und/oder biologischen Applikation im Vakuum oder bei Atmosphärendruck oder während des Abbaus des Vakuums nach der Elektronenstrahlbehandlung darstellt, wird ein Ausführungsbeispiel einer Einrichtung nach der vorliegenden Erfindung erläutert.

Eine Bestrahlungskammer 12 (Rezipient) ist über einen Anschluß 13 auf einen Arbeitsdruck von etwa 10 Pa bis einige 100 Pa evakuierbar. An seiner Eingangs- oder Oberseite ist die druckabstufende Saatgutzufuhreinrichtung 14, bestehend aus Zellradschleusen 15 sowie einem Anschluß 16, der mit einer Evakuierungseinrichtung, insbesondere einer Vakuumpumpe, verbunden ist, angeschlossen. Die Zellradschleusen 15 bilden gleichzeitig eine Dosiereinrichtung für das Saatgut 17, das über eine Verteilereinrichtung 18, die den Saatgutstrom in Richtung senkrecht zur Zeichenebene in Fig. 1 aufteilt, einem Fallschacht 19 zugeführt wird. Im freien Fall gelangt das Saatgut 17 in und weiter durch einen Bestrahlungsbereich 20. Der Bestrahlungsbereich 20 wird durch zwei Elektronenkanonen 21 erzeugt, die einander radial gegenüberliegend angeordnet sind, indem die Elektronenstrahlen 22 der Elektronenkanonen 21 mittels Scanner 23 über kanoneninterne Strahlablenkeinheiten zweidimensional aufgefächert werden. Durch programmierte Rasterung der Elektronenstrahlen 22 erfolgt im Bestrahlungsbereich 20 eine allseitige, annähernd gleichmäßige Bestrahlung des Saatgutes 17, welches als homogener Saatgutstrom den Bestrahlungsbereich 20 passiert.

Wie aus den Fig. 1 und 2 ersichtlich ist, bewirken dabei die aus den Elektronenstrahlen 22 mit größerem Energieverlust herausgestreuten Streuelektronen 7 und die vom Elektronenstrahl 22 gebildeten Plasmateilchen 8 die Aktivierung der Oberfläche des Saatgutes 17. Die im Elektronenstrahl 22 verbleibenden, nur geringfügig gestreuten, quasimonoenergetischen Elektronen 5 desinfizieren die Randschicht 10 der Samenkörner 1.

Das Ende der Bestrahlungskammer 12 ist über eine Zwischenschleuse 24 mit einer Behandlungskammer 25 verbunden, die in diesem Fall z.B. als Vakuumbehälter (Rezipient) ausgebildet ist. Dieser Behandlungsbehälter 25 ist mit einer Applikationseinrichtung 26 für die Applikation eines oder mehrerer fungizider Mittel oder lediglich deren Wirkstoffe oder einer Applikation aus mikrobiellen Antagonisten oder anderen bakteriellen oder pilzlichen Formen mikrobiologischer Komponenten oder einem Gemisch chemisch/biologischen Behandlungsmateriales versehen. Über Anschlüsse 27 und Dosier- und Fördereinrichtung wird von einem hier nicht gezeigten Vortatsbehälter die Applikation zugeführt. Mit der Applikationseinrichtung 26 wird die Applikation zersprüht und über den Sprühnebel auf das Saatgut 17 aufgetragen. Am Ausgang der Behandlungskammer 25 ist eine druckabstufende Saatgutabführeinrichtung 28 vorgesehen, die vorzugsweise übereinstimmend zu der Saatgutzuführungseinrichtung 14, bestehend aus Zellradschleusen 15 sowie einem Anschluß 16 für die Verbindung mit einer Evakuierungseinrichtung (Vakuumpumpe) vorgesehen ist. Der Saatguteintritt in die Saatgutzuführungseinrichtung 14 und der Saatgutaustritt aus der Saatgutabführungseinrichtung 28 erfolgen bei Atmosphärendruck.

Es ist selbstverständlich auch möglich, die Applikation aus fungiziden Wirkstoffen oder Mitteln oder aus mikrobiellen Antagonisten sowie der vorerläuterten weiteren mikrobiellen Applikationsformen (oder ein Gemisch aus Fungiziden und biologischen Komponenten zur Bekämpfung der Schaderreger) durch Tauchen des Saatgutes zur Einwirkung auf dieses zu bringen.

Es ist andererseits auch möglich, mehrere Behandlungskammern, gegebenenfalls in unterschiedlichen Druckstufen, zur Applikation fungizider Wirkstoffe oder Mittel oder zur Applikation antagonistischer Mikroorganismen (oder Gemischen derselben) abfolgend anzuordnen. Anstelle eines Rezipienten als Behandlungskammer 28 zur chemischen und/oder biologischen Behandlung des elektronenbestrahlten Saatgutes im Vakuum kann diese Behandlung auch unter Belüftung (Atmosphärendruck) oder während des Abbaus des Vakuums nach der Elektronenstrahlbehandlung des Saatgutes 17 erfolgen.

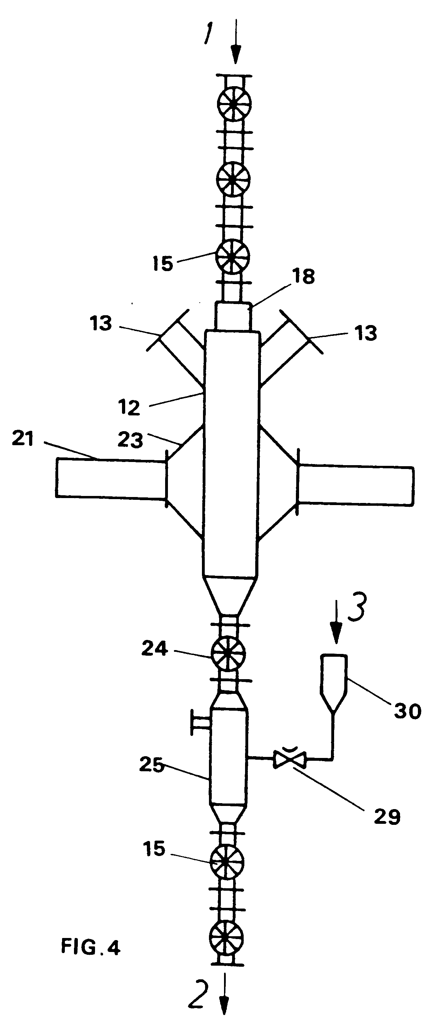

Unter Bezugnahme auf Fig. 4 wird nachfolgend noch in einer weiteren Ausführungsform der vorliegenden Erfindung eine Einrichtung zur Behandlung von Saatgut mit niederenergetischen Strahlen im Vakuum und sich daran anschließender Behandlung des bestrahlten Saatgutes mit fungiziden Wirkstoffen oder Mitteln erläutert, die in ihrem Aufbau im wesentlichen der Einrichtung nach Fig. 3 entspricht. Auch hier werden für eine integrale Verfahrensführung in einem kontinuierlichen Prozeß mit einem in Richtung der Pfeile 1, 2 fortlaufenden Saatgutstrom die Fungizide in unmittelbarem Anschluß an die vorangehende desinfizierende und oberflächenaktivierende Bestrahlung des Saatgutes mit niederenergetischen Elektronenstrahlen appliziert.

Auch nach diesem Ausführungsbeispiel der vorliegenden Erfindung ist im Anschluß an die Bestrahlungskammer 12 (Rezipient) zwischen den Zellradschleusen 15 und 24 eine Behandlungskammer 25 angeordnet, derart, daß in ihr der gewünschte Druck zur Behandlung des Saatgutes mit chemischen Wirkstoffen bzw. Mitteln erhalten wird. Über eine Dosiervorrichtung 29 wird in Abhängigkeit von der Menge des durch die Behandlungskammer 25 sich bewegenden Saatgutes die erforderliche Wirkstoffmenge in die Behandlungskammer 25 eingeführt. Vakuumerzeuger, z.B. in den Druckstufen, die eingangsseitig der Behandlungskammer 25 zur Zuführung des Saatgutstroms vorgesehen sind, werden in der Zeichnung nicht dargestellt.

Auch in diesem Ausführungsbeispiel wird das Saatgut, wie auch in der Ausführungsform gemäß Fig. 3, jeweils im freien Fall durch die Bestrahlungskammer 12 sowie durch die Behandlungskammer 25, jeweils unter Vereinzelung der Saatgutkörner, bewegt.

Grundsätzlich ist auch die Anordnung mehrerer Behandlungskammern 25 in abfolgend vertikaler Anordnung möglich, um so die Eindringtiefe von Wirkstoffen beim Einsatz mehrerer unterschiedlicher Wirkstoffe mit Hilfe des jeweiligen Druckregimes in der Behandlungskammer 25 steuern zu können. In diesem Fall wird für jede Behandlungskammer 25 eine gesonderte Dosiervorrichtung 29 sowie ein gesonderter Vorratsbehälter 30 für das Applikationsgut 3, insbesondere Fungizid, vorgesehen.

Es hat sich gezeigt, daß durch die erfindungsgemäße Verfahrensführung der Behandlung des Saatgutes nach diesem Ausführungsbeispiel der vorliegenden Erfindung mit niederenergetischen Elektronen und Fungiziden auch Schaderreger wie Flugbrand (Ustilago nuda) und andere, tiefer in das Getreidekorn eindringende Schaderreger wie Fusariumarten und Septoria nodorum, erfolgreich bekämpft werden können.

Führt die alleinige Anwendung der Bestrahlung des Saatgutes mit niederenergetischen Elektronen (bei Vermeidung phytotoxischer Effekte) gegen Schaderreger, die in den Embryo der Sammelanlage eindringen, wie z.B. Flugbrand und teilweise auch Fusarien, aufgrund der zu geringen Tiefenwirkung nicht zu hinreichendem Erfolg, werden bei dem erfindungsgemäß kombinierten Einsatz des Elektronenbeizens mit einer sich unmittelbar daran anschließenden Behandlung mit fungiziden Wirkstoffen überraschend große Erfolge erzielt.

Es wurde festgestellt, daß bei einem kombinierten Einsatz niederenergetischer Elektronen mit anschließender Fungizidbehandlung des Saatgutes durch Methfuroxam (15g, 30g/100 kg Saatgut) Wirkungsgrade bei der Schaderregerbekämpfung von 95 bis 100% erreicht werden können. Ähnliche Effekte sind auch mit den Fungiziden Guazatin (20g, 40g/100 kg Saatgut), Triadimenol (20g, 40g/100 kg Saatgut), Carbendazim (12g, 25g/100k Saatgut), Bitertanol (20g, 20g/100 kg Saatgut) und Carboxin (25g, 50g/100 kg Saatgut) als Kombinationspartner im Anschluß an die Elektronenstrahlbehandlung zu erwarten. Durch Kombination von Fungiziden miteinander, wie auch bei Verwendung von Prochloraz, Imazalil, Fenfuram, Fuberidazol, Iprodion, Thiabendazol, sind in Verbindung mit der vorangehenden Elektronenstrahlbehandlung mit niederenergetischen Elektronen weitere Reduzierungen der Einsatzmengen an Fungiziden möglich.

**Patentansprüche**

1. Verfahren zur Behandlung von Saatgut (17), das einer Behandlung mit niederenergetischen Elektronenstrahlen (5, 22) unterzogen wird, **dadurch gekennzeichnet,** daß das Saatgut (17) unmittelbar nach der Elektronenstrahlbehandlung einer Behandlung mit chemischen Wirkstoffen und/oder biologischem Material unterzogen wird.

2. Verfahren nach Anspruch 1, **dadurch gekennzeichnet,** daß in einem ersten Verfahrensschritt das Saatgut (17) vereinzelt wird und in im wesentlichen gleichmäßiger, beabstandeter Verteilung sich im freien Fall und im Vakuum durch eine Bestrahlungskammer (12) bewegt sowie hieran unmittelbar anschließend in einem zweiten Verfahrensschritt einer Applikation mit Fungiziden oder deren Wirkstoffen und/oder mikrobiellen Antagonisten oder deren Stoffwechselprodukten und Sporen und/oder mikrobiellen Synergisten unterzogen wird.

3. Verfahren nach Anspruch 1 oder 2, **dadurch gekennzeichnet,** daß auf das Saatgut (17) in dem ersten Verfahrensschritt im freien Fall im Bestrahlungsbereich (20) allseitig quasimonoenergetischer Elektronenstrahlen (5, 22), Elektronen wesentlich geringerer Energie sowie Plasmateilchen (8) an der Oberfläche des Saatgutes (17) sowie in einer außerhalb der Keimanlage (6) verlaufenden Randschicht (10) des Saatgutes (17) zur Einwirkung gebracht werden.

4. Verfahren nach zumindest einem der vorhergehenden Ansprüche 1 bis 3, **dadurch gekennzeichnet,** daß die chemische und/oder biologische Applikation des zweiten Verfahrensschrittes im Vakuum, während des Abbaus des Vakuums nach der Elektronenstrahlbehandlung des Saatgutes (17) oder unter Atmosphärendruck durchgeführt wird.

5. Verfahren nach zumindest einem der vorhergehenden Ansprüche 1 bis 4, **dadurch gekennzeichnet,** daß die chemische und/oder biologische Applikation des zweiten Verfahrensschrittes bei einem Vakuumdruck erfolgt, der etwa dem Sättigungsdampfdruck der jeweiligen, in dem zweiten Verfahrensschritt auf das Saatgut (17) aufgebrachten chemischen und/oder biologischen Applikation entspricht.

6. Verfahren nach zumindest einem der vorhergehenden Ansprüche 1 bis 5, **dadurch gekennzeichnet,** daß in Abhängigkeit von der Wahl einer Druckstufe für das Einführen der chemischen und/oder biologischen Applikation das Anlegen und Eindringen der Applikation an und in die Karyopse gesteuert wird.

7. Verfahren nach zumindest einem der vorhergehenden Ansprüche 1 bis 6, **dadurch gekennzeichnet,** daß ein Verhältnis von Desinfektion einer Randschicht zur Aktivierung einer Samenoberfläche des Saatgutes (17) durch einen Arbeitsdruck in der Bestrahlungskammer (12) eingestellt wird.

8. Einrichtung zur Behandlung von Saatgut (17) mit Elektronenstrahlen (5, 22) mit einer evakuierten Bestrahlungskammer (12), mit der eine Elektronenstrahlquelle mit Ablenkeinrichtung zum Auffächern des Elektronenstrahles (5, 22) verbunden ist, und mit einer Verteilereinrichtung (18) an einer Eintrittsstelle des Saatgutes (17) in die Bestrahlungskammer (12) zur Vereinzelung des Saatgutes (17), insbesondere zur Durchführung des Verfahrens nach Anspruch 1, **dadurch gekennzeichnet,** daß die Bestrahlungskammer (12) so ausgebildet ist, daß der Saatgutstrom im freien Fall durch die Bestrahlungskammer (12) geführt werden kann und eine Mehrzahl von Elektronenstrahlerzeugern (21) an der Bestrahlungskammer (12) angeordnet ist, zur Behandlung des Saatgutes (17) unter Auffächern der Elektronenstrahlen (5, 22) in einem Bestrahlungsbereich (20) der Bestrahlungskammer (12), sowie zumindest einer Behandlungskammer (25) in Strömungsverbindung mit der Bestrahlungskammer (12), verbunden mit Applikationseinrichtungen (26) zur chemischen und/oder biologischen Behandlung des Saatgutes (17).

9. Einrichtung nach Anspruch 8, **dadurch gekennzeichnet,** daß die Behandlungskammer (25) zwischen zwei Druckstufen und/oder Dosiervorrichtungen angeordnet ist.

10. Einrichtung nach Anspruch 8, mit Schleusen zum druckentkoppelten Ein- und Ausbringen des Saatgutes (17) in die Bestrahlungskammer (12) hinein und aus der Bestrahlungskammer (12) heraus, **gekennzeichnet durch** einen Fallschacht (19) zwischen der Verteilereinrichtung (18) und dem Bestrahlungsbereich (20), zumindest zwei Elektronenkanonen (21), die in einer Horizontalebene einander gegenüberliegend an der Bestrahlungskammer (12) angeordnet sind, versehen mit Ablenkeinrichtungen zum Auffächern der Elektronenstrahlen (5, 22) zur Bildung des Bestrahlungsbereiches (20), und wobei über eine Zwischenschleuse (24), strömungsverbunden mit der Bestrahlungskammer (12) und stromab derselben der Behandlungsbehälter (25), insbesondere Vakuumbehälter, angeordnet ist, der die Applikationseinrichtungen (26) zur Behandlung des Saatgutes (17), vorzugsweise innerhalb des Behandlungsbehälters (25), aufweist, und wobei mit dem Behandlungsbehälter (25) ein Vorratsgefäß (30) für die Aufnahme einer chemischen und/oder biologischen Applikation verbunden ist.

**Claims**

1. Method of treating seed (17), which is subjected to treatment with low-energy electron beams (5, 22), **characterized in that** the seed (17) immediately after the electron-beam treatment is subjected to treatment with chemical agents and/or biological material.

2. Method according to claim 1, **characterized in that** in a first process step the seed (17) is separated out and conveyed distributed at a substantially uniform distance apart, in free fall and in vacuo through an irradiation chamber (12) and immediately thereafter is subjected in a second process step to an application with fungicides or their agents and/or microbial antagonists or their metabolic products and spores and/or microbial synergists.

3. Method according to claim 1 or 2, **characterized in that** in the first process step the seed (17) in free fall in the irradiation region (20) is acted upon from all sides by quasi-monoenergic electron beams (5, 22), electrons of much lower energy and plasma particles (8) at the surface of the seed (17) as well as in a surface layer (10) of the seed (17) extending outside of the germinating system (6).

4. Method according to at least one of the preceding claims 1 to 3, **characterized in that** the chemical and/or biological application of the second process step is effected in vacuo, during the reduction of the vacuum after the electron-beam treatment of the seed (17) or under atmospheric pressure.

5. Method according to at least one of the preceding claims 1 to 4, **characterized in that** the chemical and/or biological application of the second process step is effected at a vacuum pressure which roughly corresponds to the saturation vapour pressure of the respective chemical and/or biological application applied onto the seed (17) in the second process step.

6. Method according to at least one of the preceding claims 1 to 5, **characterized in that** in dependence upon the selection of a pressure rating for introduction of the chemical and/or biological application, the application onto and penetration into the caryopsis of the application is controlled.

7. Method according to at least one of the preceding claims 1 to 6, **characterized in that** a ratio of disinfection of a surface layer to activation of a seed surface of the seed (17) is adjusted by means of an operating pressure in the irradiation chamber (12).

8. Device for treating seed (17) with electron beams (5, 22), having an evacuated irradiation chamber (12) to which is connected an electron-beam source with a deflection device for fanning out the electron beam (5, 22), and having a distributor device (18) at an entry point of the seed (17) into the irradiation chamber (12) for separating out the seed (17), particularly for effecting the method according to claim 1, **characterized in that** the irradiation chamber (12) is so constructed that the seed stream may be conveyed in free fall through the irradiation chamber (12) and a plurality of electron guns (21) are disposed adjacent to the irradiation chamber (12), for treating the seed (17) with simultaneous fanning out of the electron beams (5, 22) in an irradiation region (20) of the irradiation chamber (12), as well as at least one treatment chamber (25) in flow connection with the irradiation chamber (12), connected to application devices (26) for chemical and/or biological treatment of the seed (17).

9. Device according to claim 8, **characterized in that** the treatment chamber (25) is disposed between two pressure stages and/or dosing apparatuses.

10. Device according to claim 8, having locks for pressure-decoupled introduction and removal of the seed (17) into and out of the irradiation chamber (12), **characterized by** a fall shaft (19) between the distributor device (18) and the irradiation region (20), at least two electron guns (21) which are disposed in a horizontal plane opposite to one another and adjacent to the irradiation chamber (12) and are provided with deflection devices for fanning out the electron beams (5, 22) to form the irradiation region (20), and with the treatment chamber (25), in particular the vacuum container, being disposed downstream of and flow-connected via an intermediate lock (24) with the irradiation chamber (12) and having the application devices (26) for treating the seed (17), preferably inside the treatment container (25), and with there being connected to the treatment container (25) a supply vessel (30) for receiving a chemical and/or biological application.

**Revendications**

1. Procédé de traitement de semences (17), qui sont soumises à un traitement par des faisceaux électroniques de faible énergie (5, 22), caractérisé par le fait qu'immédiatement après le traitement par faisceaux électroniques on soumet les semences (17) à un traitement par des substances actives chimiques et/ou un matériau biologique.

2. Procédé selon la revendication 1 caractérisé par le fait que dans un premier pas du procédé on espace les semences (17) et, en une distribution sensiblement régulière, à distance les unes des autres, on les fait passer en chute libre et dans le vide à travers une chambre d'irradiation (12), et qu'immédiatement à la suite, dans un second pas du procédé, on les soumet à une application de fongicides ou de leurs substances actives et/ou à des antagonistes microbiens ou à leurs produits métaboliques et à leurs spores et/ou à des synergistes microbiens.

3. Procédé selon la revendication 1 ou 2, caractérisé par le fait que dans le premier pas du procédé on fait intervenir sur les semences (17), en chute libre dans la zone d'irradiation (20), de tous les côtés, des faisceaux électroniques quasimonoénergétiques (5, 22), des électrons d'énergie sensiblement plus faible ainsi que des particules de plasma (8) à la surface des semences (17) ainsi que dans une couche de bordure (10) des semences (17) placée en dehors de l'emplacement du germe (6).

4. Procédé selon au moins l'une des revendications précédentes 1 à 3, caractérisé par le fait que l'on procède à l'application chimique et/ou biologique du second pas du procédé dans le vide, pendant la suppression du vide après le traitement des semences (17) par faisceaux électroniques ou sous pression atmosphérique.

5. Procédé selon au moins l'une des revendications précédentes 1 à 4, caractérisé par le fait que l'application chimique et/ou biologique du second pas du procédé se fait sous une dépression qui correspond à peu près à la pression de vapeur saturante de l'application respective, chimique et/ou biologique exécutée sur les semences (17) dans le second pas du procédé.

6. Procédé selon au moins l'une des revendications précédentes 1 à 5, caractérisé par le fait que c'est en fonction du choix d'un étage de pression pour l'introduction du produit d'application chimique et/ou biologique que l'on commande l'application et la pénétration du produit d'application sur et dans le caryopse.

7. Procédé selon au moins l'une des revendications précédentes 1 à 6, caractérisé par le fait que c'est par une pression de travail dans la chambre d'irradiation (12) que l'on détermine le rapport entre la désinfection d'une couche de bordure et l'activation d'une surface de la semence (17).

8. Dispositif de traitement de semences (17) par des faisceaux électroniques (5, 22), comportant une chambre d'irradiation (12), mise sous vide, à laquelle est reliée une source de faisceaux électroniques avec un dispositif de déviation pour élargir en éventail le faisceau électronique (5, 22), et comportant, à une position d'entrée des semences (17) dans la chambre d'irradiation (12), un dispositif de distribution (18) pour espacer les semences (17), en particulier pour la mise en oeuvre du procédé de la revendication 1, caractérisé par le fait que la chambre d'irradiation (12) est conçue de façon que le flux de semences puisse être guidé en chute libre à travers la chambre d'irradiation (12) et qu'une pluralité de générateurs de faisceaux électroniques (21) sont disposés contre la chambre d'irradiation (12), pour le traitement des semences (17), avec élargissement en éventail des faisceaux électroniques (5, 22) dans une zone d'irradiation (20) de la chambre d'irradiation (12), ainsi que par au moins une chambre de traitement (25) en liaison fluidique avec la chambre d'irradiation (12) et reliée à des dispositifs d'application (26) pour le traitement chimique et/ou biologique des semences (17).

9. Dispositif selon la revendication 8, caractérisé par le fait que la chambre de traitement (25) est disposée entre deux étages de pression et/ou organes de dosage.

10. Dispositif selon la revendication 8, comportant des écluses pour amener les semences (17) dans la chambre d'irradiation (12) et les en évacuer en étant déconnecté de la pression, caractérisé par un puits de chute (19) entre le dispositif de distribution (18) et la zone d'irradiation (20), au moins deux canons à électrons (21) qui sont disposés dans un plan horizontal en face l'un de l'autre contre la chambre d'irradiation (12), munis de dispositifs de déviation pour élargir en éventail les faisceaux électroniques (5, 22) pour former la zone d'irradiation (20), et dispositif dans lequel, relié fluidiquement avec la chambre d'irradiation (12) par l'intermédiaire d'une écluse intermédiaire (24) et en aval de celle-ci est disposé le récipient de traitement (25), en particulier récipient sous vide, qui présente les dispositifs d'application (26) pour le traitement des semences (17), de préférence à l'intérieur du récipient de traitement (25), et dans lequel est relié au récipient de traitement (25) un réservoir (30) pour recevoir des produits d'application chimique et/ou biologique.

*Fig. 1*

*Fig. 2*

Fig. 3

FIG.4